# EUROPÄISCHE PATENTSCHRIFT

(11) **EP 0 950 039 B1**
(45) Veröffentlichungstag und Bekanntmachung des Hinweises auf die Patenterteilung: **06.04.2011**
(21) Anmeldenummer: 97951901.4
(22) Anmeldetag: 14.11.1997
(51) Int. Cl.: C04B 41/45

(54) **VERBUNDWERKSTOFFE**
COMPOSITE MATERIALS
MATERIAUX COMPOSITES

(30) Priorität: 15.11.1996 DE 19647368
(43) Veröffentlichungstag der Anmeldung: 20.10.1999
(73) Patentinhaber: Leibniz-Institut für Neue Materialien gemeinnützige GmbH, 66123 Saarbrücken (DE)
(72) Erfinder: SCHMIDT, Helmut, D-66130 Saarbrücken (DE); MENNIG, Martin, D-66287 Quierschied (DE); JONSCHKER, Gerhard, D-64646 Heppenheim (DE)
(74) Vertreter: Köllner, Malte
(86) Internationale Anmeldenummer: PCT/EP1997/006370
(87) Internationale Veröffentlichungsnummer: WO 1998/022648

(56) Entgegenhaltungen:
- WO-A-95/10491
- DE-A- 4 401 671
- DE-A- 4 417 405
- US-A- 5 041 321
- DATABASE INSPEC INSTITUTE OF ELECTRICAL ENGINEERS, STEVENAGE, GB Inspec No. 5586731, SCHMIDT H K: "Organically modified silicates and ceramics as two-phasic systems: synthesis and processing" XP002067054 -& 8TH INTERNATIONAL WORKSHOP ON GLASSES AND CERAMICS FROM GELS, FARO, PORTUGAL, 18-22 SEPT. 1995, Bd. 8, Nr. 1-3, ISSN 0928-0707, JOURNAL OF SOL-GEL SCIENCE AND TECHNOLOGY, 1997, KLUWER ACADEMIC PUBLISHERS, NETHERLANDS, Seiten 557-565, XP002067005
- SCHMIDT H: "Multifunctional inorganic-organic composite sol-gel coatings for glass surfaces" JOURNAL OF NON-CRYSTALLINE SOLIDS, Bd. 178, November 1994, Seite 302-312 XP004067786

## Beschreibung

Die Erfindung betrifft Verbundwerkstoffe, die gekennzeichnet sind durch ein Substrat und ein damit in funktionellem Kontakt stehendes Nanokomposit, der erhältlich ist durch ein Verfahren umfassend
(1) Bereitstellen eines Nanokomposit-Sols durch Oberflächenmodifizieren von
   a) kolloidalen anorganischen Partikeln mit
   b) einem oder mehreren Silanen der allgemeinen Formel (I)

      Rₓ-Si-A₄₋ₓ (I)

      worin die Reste A gleich oder verschieden sind und Hydroxylgruppen oder hydrolytisch abspaltbare Gruppen darstellen, ausgenommen Methoxy, die Reste R gleich oder verschieden sind und hydrolytisch nicht abspalt bare Gruppen darstellen und x den Wert 0, 1, 2 oder 3 hat, wobei bei mindestens 50 Stoffmengen-% der Silane x ≥ 1 ist;
      unter den Bedingungen des Sol-Gel-Prozesses mit einer unterstöchiometrischen Wassermenge von 0,1 bis 0,45 Mol Wasser pro Mol der vorhandenen hydrolysierbaren Gruppen,
(2) Inkontaktbringen des Nanokomposit-Sols mit dem Substrat, wobei das Nanokomposit-Sol vor dem Inkontaktbringen durch Zufuhr einer weiteren Wassermenge aktiviert wird,
(3) und anschließende Härtung,
   wobei das Substrat keine Glas- oder Mineralfaser und kein Pflanzenmaterial ist.

DE 4417405 beschreibt ein Verfahren zur Herstellung von strukturierten anorganischen Schichten, wobei man eine Zusammensetzung, die durch Hydrolyse und Polykondensation von hydrolysierbaren Silanen, von denen ein Teil Organosilane sind, erhältlich ist, gegebenenfalls mit einem feinskaligen Füllstoff mischt, die erhaltene Zusammensetzung auf ein Substrat aufbringt, strukturiert und thermisch verdichtet. In Beispiel 1 des Dokuments werden die Hydrolyse und Kondensation einer hydrolysierbaren Silanmischung in Anwesenheit von Kieselsol beschrieben.

Das Substrat kann die verschiedensten physikalischen Formen aufweisen und z.B. teilchen-, flocken-, faser-, band-, blattfolien-, platten- oder blockförmig sein, eine Schichtstruktur aufweisen oder einen Formkörper von beliebiger Gestalt darstellen. Der Ausdruck "teilchenförmig" soll Pulver, Mehle, Granulate, Späne, Schnitzel, Kügelchen, Perlen und allgemein alle Teilchen mit regelmäßiger oder unregelmäßiger Gestalt umfassen.

Auch das Nanokomposit kann in unterschiedlichen Verteilungsformen vorliegen. Beispielsweise kann das Nanokomposit als kontinuierliche Beschichtung oder Überzug das Substrat ganz oder teilweise bedecken oder laminatartig zwischen mehreren Substraten vorliegen. Spezielle Beispiele für Verbundwerkstoffe dieser Art sind Faserverbundwerkstoffe auf Basis von Aramiden oder Kohlenstofffasern, mit Hochtemperatur-Korrosionsschutzschichten versehene Metallsubstrate, mit einer temperaturbeständigen Imprägnierung versehene Fasern, Zwirne, Garne und Halbzeuge wie Gewebe, Gewirke, Gestricke, Geflechte, Vliese und Filze, oder Formkörper aus Glas oder Keramik, die über das Nanokomposit mit einer Metall- (z.B. Aluminium-) Folie verbunden (kaschiert) sind. Das Nanokomposit kann auch als Appretur bzw. Versteifung, Diffusionssperrschicht, Auslaugsperrschicht, Oxidationsschutzschicht, Elektroisolationsschicht oder zur Planarisierung eingesetzt sein.

Alternativ kann das Nanokomposit diskontinuierliche oder auch punktförmige Kontaktstellen zwischen mehreren Substraten bilden und z.B. matrixartig ein teilchen-, flocken- oder faserförmiges Substrat verbinden, wie dies z.B. bei Dämmstoffen der Fall ist.

Als Substratmaterialien für die erfindungsgemäßen Verbundwerkstoffe eignen sich die verschiedensten anorganischen oder organischen, natürlichen oder synthetischen Materialien.

Beispiele für geeignete Substratmaterialien sind Nichtmetalle wie Bor und Silicium sowie Metalle wie Eisen, Chrom, Kupfer, Nickel, Aluminium, Titan, Zinn, Zink und Silber und entsprechende Legierungen (z.B. Messing Stahl, Bronze) in Form von Pulvern, Fasern, Folien, Geweben, Blechen und Formstücken; Glasmaterialien in Form von Pulvern, Flocken, Platten oder Formstücken; Keramikmaterialien in Form von Pulvern, Fasern, Geweben, Vliesstoffen, Flocken, Platten und Formstücken; Kohlenstoff (Ruß, Graphit, Fullerene) in Form von Pulvern, Fasern, Schichten, Platten und Formstücken; Oxide wie SiO₂,

Al₂O₃, Fe₂O₃, Fe₃O₄, Cr₂O₃, CuO, Cu₂O, In₂O₃, Mn₂O₃, PbO, PdO, SnO₂, TiO₂, ZnO und ZrO₂, Nitride wie BN, Si₃N₄ und TiN, Carbide wie SiC, TiC und B₄C, Silicide, nicht-stöchiometrische Verbindungen (z.B. SiOₓC_{y}N_{z}), Komposite und Hybride in Form von Pulvern und Fasern; vorzugsweise temperaturbeständige Kunststoffe wie Polyolefine, Fluorpolymere wie Teflon, Homo- und Copolymerisate von Vinylhalogeniden oder Vinylestern, Polycarbonate, Polyester, Polyurethane, Aramide, Polyamide, Acrylharze, Silicone und Ormocere in Form von Fasern, Granulat, Folien, Filzen, Geweben, Vliesstoffen, Platten und Formstücken; tierische Naturfasern und -stoffe wie Wolle, Pelze oder Leder; und Mineralien wie Montmorillonite, Bentonite, Glimmer, Vermiculit, Perlit, Ferrit, Spinelle, z.B. Magnetit oder Kupferchromspinell, Schwerspat, Flußspat, Asbest, Talkum, Aerogele, Sande und Tone.

Unter faserförmigen Substraten werden sowohl Einzelfasern, einschließlich Hohlfasern und Whisker, als auch entsprechende Faserbündel, Schnüre, Taue, Zwirne und Garne sowie Halbzeuge wie Gewebe, Gewirke, Gestricke, Geflechte, Textilien, Vliesstoffe, Filze, Bahnen und Matten verstanden. Konkrete Beispiele hierfür sind Kohlenstoffasern, Gewebe aus Kunstfasern, Metallfasern und Metallgewebe.

Das erfindungsgemäß eingesetzte Nanokomposit wird hergestellt durch Oberflächenmodifizierung von kolloidalen anorganischen Partikeln (a) mit einem oder mehreren Silanen (b) gegebenenfalls in Gegenwart von anderen Zusatzstoffen (c) unter den Bedingungen des Sol-Gel-Prozesses.

Einzelheiten des Sol-Gel-Prozesses sind bei C.J. Brinker, G.W. Scherer: "Sol-Gel Science - The Physics and Chemistry of Sol-Gel-Processing", Academic Press, Boston, San Diego, New York, Sydney (1990) und in den DE 1941191, DE 3719339, DE 4020316 und DE 4217432 beschrieben.

Dort sind auch spezielle Beispiele für die erfindungsgemäß einsetzbaren Silane (b) sowie deren hydrolytisch abspaltbare Reste A und hydrolytisch nicht abspaltbare Reste R angegeben.

Bevorzugte Beispiele für hydrolytisch abspaltbare Gruppen A sind Wasserstoff, Halogen (F, C1, Br und I, insbesondere C1 und Br), Alkoxy (insbesondere C₂₋₄-Alkoxy, wie z.B. Ethoxy, n-Propoxy, i-Propoxy und Butoxy), Aryloxy (insbesondere C₆₋₁₀ -Aryloxy, z.B. Phenoxy), Alkaryloxy (z.B. Benzyloxy), Acyloxy (insbesondere C₁₋₄-Acyloxy, wie z.B. Acetoxy und Propionyloxy) und Alkylcarbonyl (z.B. Acetyl). Ebenfalls geeignete Reste A sind Aminogruppen (z.B. Mono- oder Dialkyl-, -aryl- und -aralkylamingruppen mit den oben genannten Alkyl-, Aryl- und Aralkylresten), Amidgruppen (z.B. Benzamido) und Aldoxim- oder Ketoximgruppen. Zwei oder drei Reste A können zusammen auch eine das Si-Atom komplexierende Gruppierung bilden, wie dies z.B. bei Si-Polyolkomplexen der Fall ist, die sich von Glykol, Glycerin oder Brenzkatechin ableiten. Besonders bevorzugte Reste A sind C₂₋₄-Alkoxygruppen, insbesondere Ethoxy. Methoxygruppen sind für die Zwecke der Erfindung weniger geeignet, da sie zu hohe Reaktivität aufweisen (kurze Verarbeitungszeit des Nanokomposit-Sols) und zu Nanokompositen bzw. Verbundmaterialien mit ungenügender Flexibilität führen können.

Die genannten hydrolysierbaren Gruppen A können gegebenenfalls einen oder mehrere übliche Substituenten tragen, z.B. Halogenatome oder Alkoxygruppen.

Die hydrolytisch nicht abspaltbaren Reste R sind vorzugsweise ausgewählt aus Alkyl (insbesondere C₁₋₄-Alkyl, wie Methyl, Ethyl, Propyl und Butyl), Alkenyl (insbesondere C₂₋₄-Alkenyl, wie z.B. Vinyl, 1-Propenyl, 2-Propenyl und Butenyl), Alkinyl (insbesondere C₂₋₄Alkinyl, wie Acetylenyl und Propargyl), Aryl (insbesondere C₆₋₁₀-Aryl, wie z.B. Phenyl und Naphthyl) und den entsprechenden Alkaryl- und Arylalkylgruppen. Auch diese Gruppen können gegebenenfalls einen oder mehrere übliche Substituenten, z.B. Halogen-, Alkoxy-, Hydroxy-, Amino- oder Epoxidgruppen, aufweisen.

Die oben genannten Alkyl-, Alkenyl- und Alkinylgruppen schließen die entsprechenden cyclischen Reste, wie z.B. Cyclopropyl, Cyclopentyl und Cyclohexyl, ein.

Besonders bevorzugte Reste R sind gegebenenfalls substituierte C₁₋₄-Alkylgruppen, insbesondere Methyl und Ethyl, und gegebenenfalls substituierte C₆₋₁₀-Alkylgruppen, insbesondere Phenyl.

Weiter ist es bevorzugt, daß in der obigen Formel (I) x den Wert 0, 1 oder 2, und besonders bevorzugt 0 oder 1, aufweist. Ferner weisen vorzugsweise mindestens 60 und insbesondere mindestens 70 Stoffmengen-% der Silane der Formel (I) den Wert x = 1 auf. In bestimmten Fällen kann es noch günstiger sein, wenn mehr als 80 oder sogar mehr als 90 Stoffmengen-% (z.B. 100%) der Silane der Formel (I) den Wert x = 1 aufweisen.

Die erfindungsgemäßen Verbundwerkstoffe können z.B. aus reinem Methyltriethoxysilan (MTEOS) oder aus Mischungen von MTEOS und Tetraethoxysilan (TEOS) als Komponente (b) hergestellt werden.

Die Verwendung von Silanen mit einer oder mehreren Gruppen R, die substituiert sind, empfiehlt sich insbesondere dann, wenn dem Verbundmaterial besondere Eigenschaften verliehen werden soll. Beispielsweise kann durch Einführung von Fluoratomen (z.B. in Form von substituierten aliphatischen (insbesondere Alkyl-) Resten) ein Verbundwerkstoff erhalten werden, der Wasser-, Schmutz-, Staub- und Öl-abweisende Eigenschaften aufweist.

Konkrete Beispiele für Silane der allgemeinen Formel (I) sind Verbindungen der folgenden Formeln:
Si(OC₂H₅)₄, Si(O-n- oder i-C₃H₇)₄-Si(OC₄H₉)₄, SiCl₄, Si (OOCCH₃)₄, CH₃-SiCl₃, CH₃-Si(OC₂H₅)₃, C₂H₅-SiCl₃, C₂H₅-Si(OC₂H₅)₃, C₃H₇-Si(OC₂H₅)₃, C₆H₅-Si- (OC₂H₅)₃, C₆H₅-Si(OC₂H₅)₃, (C₂H₅O)₃-Si-C₃H₆-Cl, (CH₃)₂SiCl₂, (CH₃)₂Si(OC₂H₅)₂, (CH₃)₂Si-(OC₂H₅)₂, (CH₃)₂Si(OH)₂, (C₆H₅)₂SiCl₂, (C₆H₅)₂ Si(OC₂H₅)₂, (C₆H₅)₂Si(OC₂H₅)₂, (i-C₃H₇)₃SiOH, CH₂=CH-Si(OOCCH₃)₃, CH₂=CH-SiCl₃, CH₂=CH-Si(OC₂H₅)₃, CH₂=CHSi(OC₂H₅)₃, HSiCl₃, CH₂=CH-Si(OC₂H₄OCH₃)₃, CH₂=CH-CH₂-Si(OC₂H₅)₃, CH₂=CH-CH₂-Si(OC₂H₅)₃, CH₂=CH-CH₂-Si(OOCCH₃)₃, CH₂=C(CH₃)COO-C₃H₇-Si-(OC₂H₅)₃, CH₂=C(CH₃)-COO-C₃H₇-Si(OC₂H₅)₃, n-C₆H₁₃-CH₂-CH₂-Si(OC₂H₅)₃, n-C₈H₁₇-CH₂-CH₂-Si(OC₂H₅)₃, (C₂H₅O)₃Si-(CH₂)₃-O-CH₂-COH-COH₂.

Diese Silane lassen sich nach bekannten Methoden herstellen; vgl. W. Noll, "Chemie und Technologie der Silicone", Verlag Chemie GmbH, Weinheim/Bergstraße (1968).

Bezogen auf die oben genannten Komponenten (a), (b) und (c) beträgt der Anteil der Komponente (b) gewöhnlich 20 bis 95, vorzugsweise 40 bis 90 und besonders bevorzugt 70 bis 90 Masse-%, ausgedrückt als Polysiloxan der Formel: RₓSiO₍₂₋₀,₅ₓ), welches bei der Kondensation entsteht.

Die erfindungsgemäß verwendeten Silane der allgemeinen Formel (I) können ganz oder teilweise in Form von Vorkondensaten eingesetzt werden, d.h. Verbindungen, die durch teilweise Hydrolyse der Silane der Formel (I), entweder allein oder im Gemisch mit anderen hydrolysierbaren Verbindungen, entstanden sind. Derartige, im Reaktionsmedium vorzugsweise lösliche Oligomere können geradkettige oder cyclische niedermolekulare Teilkondensate (Polyorganosiloxane) mit einem Kondensationsgrad von z.B. etwa 2 bis 100, insbesondere 2 bis 6, sein.

Die zur Hydrolyse und Kondensation der Silane der Formel (I) eingesetzte Wassermenge beträgt 0,1 bis 0,45, und besonders bevorzugt 0,25 bis 0,45 Mol Wasser pro Mol der vorhandenen hydrolysierbaren Gruppen. Oft werden besonders gute Ergebnisse mit 0,35 bis 0,45 Mol Wasser pro Mol der vorhandenen hydrolysierbaren Gruppen erzielt.

Spezielle Beispiele für kolloidale anorganische Partikel (a) sind Sole und nanoskalige dispergierbare Pulver (Teilchengröße vorzugsweise bis zu 300, insbesondere bis zu 100 nm und besonders bevorzugt bis zu 50 nm) von SiO₂, TiO₂, ZrO₂, Al₂O₃, Y₂O₃, CeO₂, SnO₂, ZnO, Eisenoxiden oder Kohlenstoff (Ruß und Graphit), insbesondere von SiO₂.

Der Anteil der Komponente (a), bezogen auf die Komponenten (a), (b) und (c), beträgt gewöhnlich 5 bis 60, vorzugsweise 10 bis 40 und besonders bevorzugt 10 bis 20 Masse-%.

Zur Herstellung des Nanokomposits können als Eventualkomponenten (c) andere Zusatzstoffe in Mengen von bis zu 20 Masse- %, vorzugsweise bis zu 10 und insbesondere bis zu 5 Masse-% eingesetzt werden, z.B. Härtungskatalysatoren wie Metallsalze und Metallalkoxide (z.B. Aluminium-, Titan-, Zirkonalkoxide), organische Bindemittel wie Polyvinylalkohol, Polyvinylacetat, Stärke, Polyethylenglykol und Gummi arabicum, Pigmente, Farbstoffe, flammhemmende Zusätze, Verbindungen glasbildender Elemente (z.B. Borsäure, Borsäureester, Natriummethylat, Kaliumacetat, Aluminium-sek-butylat, etc.), Korrosionsschutzmittel und Beschichtungshilfsmittel. Die Verwendung von Bindemitteln ist erfindungsgemäß weniger bevorzugt.

Die Hydrolyse und Kondensation wird unter Sol-Gel-Bedingungen in Gegenwart saurer _Kondensationskatalysatoren (z.B. Salzsäure) bei einem pH-Wert von vorzugsweise 1 bis 2 durchgeführt, bis ein viskoses Sol entsteht.

Vorzugsweise wird neben dem Lösungsmittel, das bei der Hydrolyse der Alkoxygruppen entsteht, kein zusätzliches Lösungsmittel angewandt. Falls gewünscht, können jedoch z.B. alkoholische Lösungsmittel, wie Ethanol, oder andere polare, protische oder aprotische Lösungsmittel, wie Tetrahydrofuran, Dioxan, Dimethylformamid oder Butylglykol, eingesetzt werden.

Um eine günstige Solpartikel-Morphologie und Sol-Viskosität einzustellen, unterwirft man das erhaltene Nanokomposit-Sol vorzugsweise einem gezielten Nachreaktionsschritt, bei dem die Reaktionsmischung mehrere Stunden bis mehrere Tage auf Temperaturen von 40 bis 120°C erwärmt wird. Besonders bevorzugt ist eine eintägige Lagerung bei Raumtemperatur oder eine mehrstündige Erwärmung auf 60-80°C. Hierbei entsteht ein Nanokomposit-Sol mit einer Viskosität von vorzugsweise 5 bis 500 mPas, besonders bevorzugt 10 bis 50 mPas. Selbstverständlich kann die Viskosität des Sols auch durch Zusatz von Lösungsmitteln oder Entfernung von Reaktions-Nebenprodukten (z.B. Alkoholen) auf für den speziellen Anwendungszweck geeignete werte eingestellt werden. Der Nachreaktionsschritt kann auch vorzugsweise mit einer Reduktion des Lösungsmittelanteils gekoppelt werden.

Der Masseanteil des Nanokomposits am Verbundwerkstoff beträgt vorzugsweise 0,1 bis 80, insbesondere 1 bis 40 und besonders bevorzugt 1 bis 20 Masse-%.

Die Vereinigung von Substrat und Nanokomposit bzw. Nanokomposit-Sol erfolgt nach einer zumindest anfänglichen Hydrolyse der Komponente (b) und auf jeden Fall vor der abschließenden Härtung. Das Nanokomposit-Sol wird vor dem Inkontaktbringen mit dem Substrat durch Zufuhr einer weiteren Wassermenge aktiviert.

Das Inkontaktbringen kann auf jede dem Fachmann bekannte und für den gegebenen Fall als sinnvoll erachtete Art und Weise erfolgen, z.B. durch einfaches Vermischen von Substrat und Nanokomposit-Sol, Tauchen, Sprühen, Rakeln, Spritzen, Schleudern, Gießen, Streichen, Bürsten usw. in das bzw. mit dem Nanokomposit-Sol. Um die Haftung zwischen Substrat und Nanokomposit zu verbessern, kann es sich in manchen Fällen als vorteilhaft erweisen, das Substrat vor dem Kontaktieren mit dem Nanokomposit bzw. dessen Vorstufe einer üblichen Oberflächen-Vorbehandlung zu unterziehen, z.B. Korona-Entladung, Entfetten, Behandlung mit Primern wie Aminosilanen, Epoxysilanen, Schlichten aus Stärke oder Siliconen, Komplexbildnern, Tensiden etc.

Der abschließenden Härtung kann eine Trocknungsstufe bei Raumtemperatur oder leicht erhöhter Temperatur (z.B. bis zu ca. 50°C) vorangehen.

Die eigentliche Härtung bzw. eine Vorhärtung kann bei Raumtemperatur durchgeführt werden, erfolgt jedoch vorzugsweise durch Wärmebehandlung bei Temperaturen über 50°C, vorzugweise über 100°C und besonders bevorzugt bei 150°C oder darüber. Die maximale Härtungstemperatur hängt u.a. vom Schmelzpunkt bzw. der Temperaturbeständigkeit des Substrats ab, liegt aber in der Regel bei 250 bis 300°C. Bei metallischen oder mineralischen Substraten sind aber auch wesentlich höhere Härtungstemperaturen möglich, z.B. 400 bis 500°C und darüber. Die Härtung kann gegebenenfalls in einer Schutzgasatmosphäre (z.B. N₂, Argon) durchgeführt werden, insbesondere wenn das Substrat oxidationsempfindlich ist. Übliche Härtungszeiten liegen im Bereich von Minuten bis Stunden, z.B. 2 bis 30 Minuten.

Neben der konventionellen thermischen Härtung (z.B. im Umluftofen) kommen als weitere Härtungsmethoden z.B. die photochemische Härtung (UV-VIS), die Elektronenstrahl-Härtung, Rapid Annealing und die Härtung mit IR- und Laserstrahlen in Frage.

Vor der Härtung kann der hergestellte Verbund gegebenenfalls auch noch einer Formgebung unterzogen werden.

Gegenstand der Erfindung ist auch die Verwendung des obigen Nanokomposits für die Beschichtung und/oder Konsolidierung der obigen Substrate. Der Begriff "Konsolidierung" soll hier alle Maßnahmen einschließen, die geeignet sind, das Substrat in verfestigter bzw. kompaktierter Form bereitzustellen und umfaßt somit z.B. eine Imprägnierung des Substrats mit Nanokomposit, eine Einlagerung des Substrats in eine Matrix aus Nanokomposit,oder eine Verklebung bzw. Verbindung von Substraten bzw. Substratteilen mit Nanokomposit. Unter "Beschichtung" wird insbesondere eine teilweise oder vollständige Umhüllung eines Substrats mit einem Nanokomposit verstanden, um diesem Substrat oder Teilen davon besondere Eigenschaften zu verleihen, wie z.B. Oxidationsbeständigkeit, Flammverzögerung, Hydrophobie, Oleophobie, Härte, Undurchlässigkeit, elektrische oder thermische Isolation.

Die folgenden Beispiele erläutern die Erfindung, ohne sie zu beschränken.

In den folgenden Beispielen handelt es sich bei dem darin eingesetzten Kieselsol um ein wäßriges Kieselsol der Firma BAYER ("Levasil 300/30") mit einem Feststoffgehalt von 30 Masse-% und einer Teilchengröße von 7 bis 10 nm. In den Beispielen werden die folgenden Abkürzungen verwendet:
- MTEOS =: Methyltriethoxysilan
- TEOS =: Tetraethoxysilan
- PTEOS =: Phenyltriethoxysilan.
- ETEOS =: Ethyltriethoxysilan

### REFERENZBEISPIEL 1

184 ml MTEOS und 51,4 ml TEOS werden gemischt und die Hälfte dieser Mischung wird mit 62,8 ml Kieselsol und 1,71 ml konzentrierter (37%) Salzsäure stark gerührt. Nach 5 Minuten wird die zweite Hälfte des Alkoxid-Gemisches zu dem Ansatz gegeben, worauf noch 5 Minuten weiter gerührt wird. Anschließend wird das entstandene Sol einem Nachreaktionsschritt (15minütiges Stehenlassen bei Raumtemperatur) unterzogen. Der Feststoffgehalt des Sols beträgt 327 g/l.

Vor der Anwendung werden dem Sol ca. 2,5 ml Wasser zugesetzt, um auf einen Wassergehalt von 0,85 Mol Wasser pro Mol hydrolysierbarer Gruppe zu kommen.

Mit dem erhaltenen Sol werden Kohlefasergewebe durch Foulardieren getränkt und anschließend in mehreren Lagen in einer Heißpresse 20 Minuten bei 140°C unter einem Druck von 100 kN gehärtet. Man erhält ein festes, elastisches Kohlefaser-Verbundmaterial, das aufgrund des anorganischen Bindemittels auch temperaturstabil ist. So kann ein 10 x 1 cm großer Streifen aus diesem Material mit zwei Bunsenbrennern mehr als 30 Minuten erhitzt werden, ohne daß die Kohlefasern verglühen. Im Vergleich dazu brennt ein Epoxidharz-gebundener Gewebestreifen bei Beflammung und reißt nach 10 Minuten ab.

### REFERENZBEISPIEL 2

Mit dem Bindemittel aus Referenzeispiel 1 werden Aramid-Gewebe durch Foulardieren getränkt und anschließend in mehreren Lagen in einer Heißpresse 20 Minuten bei 140°C unter einem Druck von 100 kN gehärtet. Man erhält ein festes, elastisches Faserverbundmaterial, das gegenüber organisch gebundenen Aramidgeweben erhöhte thermische Beständigkeit aufweist.

### REFERENZBEISPIEL 3

22 g Aluminiumpulver werden mit dem Bindemittel aus Referenzbeispiel 1 versetzt, so daß 15 Masse-% des Gesamt-Feststoffgehalts aus Bindemittel besteht. Anschließend wird die feuchte Masse in ein Preßbesteck (Durchmesser 4 cm) eingefüllt und 30 Minuten bei 50 kN Druck verpreßt. Die Aushärtung erfolgt im Preßbesteck 1 Stunde bei 80°C.

Man erhält einen Preßling aus einem Metall-Glas-Komposit, der bis zu Temperaturen von 550°C thermisch nachgehärtet werden kann und dann glasartige Härte bei hoher thermischer Leitfähigkeit aufweist.

### BEISPIEL 1

Entsprechend Referenzbeispiel 1 wird ein Bindemittel dadurch hergestellt, daß man 670 ml MTEOS und 186 ml TEOS mischt und im Verhältnis 1:1 aufteilt. Die Hälfte der Mischung wird mit 192 g Kieselsol (SNOWTEX 50 von Nissan Chemicals) intensiv gerührt und mit 4,4 g konzentrierter Salzsäure versetzt. Nach 5 Minuten wird die zweite Hälfte der Silanmischung zugegeben.

Nach einer Nachreaktionsphase von 12 Stunden wird das Nanokomposit-Sol mit 10 Vol-% Wasser intensiv vermischt und noch weitere 5 Minuten gerührt. Hierauf mischt man Flammruß in einer Menge zu, daß das Bindemittel 20% des Feststoffgehaltes ausmacht. Die Masse wird in ein beheiztes Preßwerkzeug (4 cm Duchmesser) gegeben und 30 Minuten bei 140°C unter einem Druck von 20 kN gehärtet.

Man erhält einen festen Formkörper aus einem SiO₂-Kohlenstoff-Komposit, der bis zu Temperaturen von 1000°C mechanisch stabil ist.

### BEISPIEL 2

Mit dem Bindemittel aus Beispiel 1 werden Aramid-Gewebe durch Foulardieren getränkt und anschließend in mehreren Lagen in einer Heißpresse 20 Minuten bei 140°C unter einem Druck von 100 kN gehärtet.

Man erhält ein im Vergleich zu dem Material aus Referenzbeispiel 2 flexibleres Faserverbundmaterial, das gegenüber organisch gebundenen Aramid-Geweben erhöhte thermische Beständigkeit aufweist.

### BEISPIEL 3

803 ml MTEOS und 223 ml TEOS werden gemischt und im Verhältnis 1:1 aufgetrennt. Eine Hälfte der Silanmischung wird mit 165 g ZrO₂-Sol (NZS-30A von Nissan Chemicals) und 4,4 g konzentrierter Salzsäure intensiv gerührt und nach 5 Minuten mit der zweiten Hälfte der Silanmischung vermischt.

Nach einer Nachreaktionsphase von 12 Stunden wird das Bindemittel mit 10 Vol-% Wasser intensiv vermischt und noch weitere 5 Minuten gerührt. Zu der erhaltenen Mischung wird Bornitrid einer mittleren Korngröße von 1 µm in einer solchen Menge gegeben, daß 85% der Gesamtmasse aus Bornitrid bestehen. Die resultierende Masse wird in einer Dicke von ca. 0,5 mm auf eine Glasplatte aufgestrichen. Nach 12-stündigem Trocknen bei Raumtemperatur wird die Schicht entfernt und als freistehender Formkörper bei 500°C gesintert. Man erhält einen festen Formkörper.

### REFERENZBEISPIEL 4

### 1. Herstellung des Sole

Zu einer Mischung von 65,4 ml MTEOS und 18,3 ml TEOS werden unter starkem Rühren 16,7 ml Kieselsol und 0,49 ml konzentrierte Salzsäure gegeben. Nach der Umsetzung der Silane wird das Sol in einem Eisbad gekühlt und mit einem Glasfaserfilter (Firma Schleicher und Schüll, Rezist 40 GF) filtriert.

### 2. Anwendung des Sols

100 g Glasschaumperlen werden mit 20 ml des obigen Sols vermischt und bei einem Druck von 4,4 MPa in einer Preßform mit einem Durchmesser von 12 cm 5 Minuten lang verpreßt. Anschließend wird der Preßling in einem Umluft-Trockenschrank 8 Stunden lang einer Temperatur von 80°C ausgesetzt.Man erhält einen Formkörper, der bei einer Temperatur unterhalb des Schmelzpunktes des Rohmaterials formstabil bleibt (Anteil der Glasperlen im Formkörper 6 Masse-%).

### REFERENZBEISPIEL 5

Ein gereinigtes Edelstahlblech (1.4301) wird mit einem wie in Referenzbeispiel 4 hergestellten Sol mit einer Ziehgeschwindigkeit von 2 mm/s tauchbeschichtet. Das Substrat wird 5 Minuten an Luft getrocknet und anschließend in einer N₂-Atmosphäre mit einer Heizrate von 1 K/Minute auf 600°C erhitzt. Hierbei wird ein glasartiger Überzug mit einer Dicke von 3 µm auf dem Edelstahlblech erhalten. Das beschichtete Edelstahlblech kann an Luft bis zu einer Temperatur von 500°C thermisch belastet werden, ohne daß eine Verfärbung des Bleches auftritt.

### REFERENZBEISPIEL 6

Ein gereinigtes Aluminiumblech wird wie in Referenzbeispiel 5 beschrieben beschichtet und nach dem Trocknen 1 Stunde lang an Luft bei einer Temperatur von 500°C gehalten. Hierdurch wird eine glasartige Schicht mit einer Dicke von 3 µm erhalten. Das so beschichtete Blech zeigt in konzentrierter Salzsäure keine Gasentwicklung, während sich ein unbeschichtetes Blech unter starker Gasentwicklung auflöst.

### REFERENZBEISPIEL 7

Ein gereinigtes Edelstahlblech (1.4301) wird mit einer Mischung aus 2,5 ml Natriumwasserglas (37/40) und 47,5 ml Wasser tauchbeschichtet (Primer) und bei 80°C getrocknet. Anschließend wird das Edelstahlblech wie in Referenzbeispiel 5 beschrieben beschichtet und nach dem Trocknen mit einer Heizrate von 1 K/Min. 1 Stunde in Luft bei 550°C erhitzt. Das so beschichtete Edelstahlblech kann an Luft bis zu einer Temperatur von 500°C thermisch belastet werden, ohne daß eine Verfärbung des Bleches auftritt.

### REFERENZBEISPIEL 8

### 1. Herstellung des Standardbindemittels A

655 g MTEOS und 191 g TEOS werden in einen Kolben eingebracht, worauf man die Mischung unter intensivem Rühren mit 142 g wäßrigem Kieselsol versetzt und unmittelbar 9 ml H₂SO₄ (40 Masse-%) zugibt. Nach ca. 1 Minute intensivem Rühren setzt eine exotherme Reaktion ein (Erwärmung auf ca. 60°C). Vor der weiteren Verwendung wird die Dispersion zur Alterung über Nacht bei Raumtemperatur gelagert oder 1 Stunde unter Rückfluß gekocht.

### 2. Herstellung des Standardbindemittels B

621 g MTEOS und 181 g TEOS werden in einen Kolben eingebracht, worauf man die Mischung unter intensivem Rühren mit 185 g wäßrigem Kieselsol ("Levasil 50/50"; Feststoffanteil SiO₂ 50 Masse-%, von BAYER) versetzt und unmittelbar 10,3 ml H₂SO₄ (40 Masse-%) zugibt. Nach ca. 1 Minute intensivem Rühren setzt eine exotherme Reaktion ein (Erwärmung auf ca. 60°C). Vor der weiteren Verwendung wird die Dispersion zur Alterung über Nacht bei Raumtemperatur gelagert oder 1 Stunde unter Rückfluß gekocht.

### 3. Herstellung des Standardbindemittels C

463 g MTEOS, 180 g TEOS und 128 g Dimethyldiethoxysilan werden in einen Kolben eingebracht, worauf man die Mischung unter intensivem Rühren mit 267 g wäßrigem Kieselsol versetzt und unmittelbar 6,06 ml HCl (37 Masse-%) zugibt: Nach ca. 1 Minute intensivem Rühren setzt eine exotherme Reaktion ein (Erwärmung auf ca. 60°C). Die Dispersion kann direkt nach Abkühlung auf Raumtemperatur verwendet werden.

### REFERENZBEISPIEL 9

### Herstellung von Formteilen aus Steinwolle

Unbehandelte Steinwolle wird mit dem Standardbindemittel A (Feststoffanteil: 35 Masse-%) mit einer Sprühpistole besprüht und dabei ständig in einem Trommelmischer verwirbelt. Dabei werden Bindemittelanteile von 3 bis 12 Masse-% verwendet. Die Proben werden nach dem Besprühen bei 150°C in einer Heizpresse bei einem Preßdruck von 0,5 t und einer Heizzeit von 20 min und einer Kühlzeit von 20 min verpreßt. Man erhält stabile Formkörper.

### REFERENZBEISPIEL 4

### Herstellung von gebundenen Dammstoffplatten aus Perlit

90 g Standardbindemittel A mit einem Feststoffanteil von 50 Masse-% werden mit 6 g Wasser versetzt und in einem Trommelmischer mit 300 g Perlit (Schüttdichte 5 1) intensiv vermischt. Das Gemisch wird in einer Presse zu Platten (15 cm x 15 cm x 5 cm) verpreßt. Die Platten werden nach der Entnahme aus der Presse 1 h bei 150°C ausgehärtet. Die so hergestellten Dämmstoffplatten zeigen gegenüber mit Wasserglas gebundenen Platten bei Temperaturwechselbelastung bis 1000°C keine Rißbildung.

### REFERENZBEISPIEL 10

Herstellung von Hochtemperatur-Aramidfaser-Kompositen Aramid-Hochmodulfasergewebe (Du Pont, Kevlar, Flächengewicht 110 g/cm², gewaschen, Köperbindung) wird in dem Standardbindemittel C getränkt und in mehreren Lagen übereinandergelegt. Die Lagen werden in dem flüssigen Sol miteinander verpreßt. Die miteinander verbundenen Gewebelagen werden 12 h bei Raumtemperatur in der Bindemittelmatrix getrocknet. Anschließend wird der Komposit 6 h bei 70°C und 4 h bei 130°C verdichtet. Nach diesem Verfahren können Hochtemperatur-Aramidfaser-Komposite mit mehreren Lagen hergestellt werden. Die Komposite zeichnen sich gegenüber mit Epoxidharz gebundenen Aramidfaser-Kompositen durch erhöhte Temperaturbeständigkeit aus.

### REFERENZBEISPIEL 11

Herstellung von Hochtemperatur-Kohlenstoffaser-Kompositen Kohlegewebe ("Tenax", Flächengewicht 93 g/cm², Leinwandbindung, von AKZO) wird in dem Standardbindemittel C getränkt und in mehreren Lagen übereinandergelegt. Die Lagen werden in dem flüssigen Sol miteinander verpreßt. Die miteinander verbundenen Gewebelagen werden 12 h bei Raumtemperatur in der Bindemittelmatrix getrocknet. Anschließend wird das Komposit 6 h bei 70°C und 4 h bei 130°C verdichtet. Nach diesem Verfahren können Hochtemperatur-Kohlefaser-Komposite mit mehreren Lagen hergestellt werden. Die Komposite zeichnen sich gegenüber mit Epoxidharz gebundenen Kohlestoffaser-Kompositen durch erhöhte Temperaturbeständigkeit aus.

### REFERENZBEISPIEL 12

**Herstellung von Hochtemperatur-Keramidfaser-Kompositen** Siliciumcarbid-Fasern ("Nicalon" von Nippon Carbon) werden durch eine Suspension mit dem Standardbindemittel C gezogen.

Die beschichteten Fasern werden nach Antrocknung zu Faserbündeln oder unidirektionalen bzw. multidirektionalen Laminaten gelegt und 12 h bei Raumtemperatur getrocknet. Anschließend werden die Komposite 6 h bei 60°C und 12 h bei 130°C verdichtet. Nach diesem Verfahren können Hochtemperatur-Siliciumcarbid-Komposite hergestellt werden.

## Patentansprüche

1. Verbundwerkstoff, **gekennzeichnet durch** ein Substrat, das keine Glas- oder Mineralfaser und kein Pflanzenmaterial ist, und ein damit in funktionellem Kontakt stehendes Nanokomposit, der erhältlich ist **durch** ein Verfahren umfassend
(1) Bereitstellen eines Nanokomposit-Sols **durch** Oberflächenmodifizieren von
a) kolloidalen anorganischen Partikeln mit
b) einem oder mehreren Silanen der allgemeinen Formel
RₓSiA₄₋ₓ (I)
worin die Reste A gleich oder verschieden sind und Hydroxylgruppen oder hydrolytisch abspaltbare Gruppen darstellen, ausgenommen Methoxy, die Reste R gleich oder verschieden sind und hydrolytisch nicht abspaltbare Gruppen darstellen und x den Wert 0, 1, 2 oder 3 hat, wobei bei mindestens 50 Stoffmengen-% der Silane x ≥ 1 ist;
unter den Bedingungen des Sol-Gel-Prozesses mit einer unterstöchiometrischen Wassermenge von 0,1 bis 0,45 Mol Wasser pro Mol der vorhandenen hydrolysierbaren Gruppen,
(2) Inkontaktbringen des Nanokomposit-Sols mit dem Substrat, wobei das Nanokomposit-Sol vor dem Inkontaktbringen **durch** Zufuhr einer weiteren Wassermenge aktiviert wird,
(3) und anschließende Härtung.

2. Verbundwerkstoff nach Anspruch 1, **dadurch gekennzeichnet, dass** die Oberflächenmodifizierung in Gegenwart eines sauren Kondensationskatalysators bei einem pH-Wert von 1 bis 2 durchgeführt worden ist.

3. Verbundwerkstoff nach Anspruch 1 oder 2, **dadurch gekennzeichnet, dass** die kolloidalen anorganischen Partikel (a) ausgewählt sind aus Solen und nanoskaligen, dispergierbaren Pulvern von SiO₂, TiO₂, ZrO₂, Al₂O₃, Y₂O₃, CeO₂, SnO₂, ZnO, Eisenoxiden oder Kohlenstoff.

4. Verbundwerkstoff nach einem der Ansprüche 1 bis 3, **dadurch gekennzeichnet, dass** zur Herstellung des Nanokomposit-Sols andere Zusatzstoffe (c) verwendet worden sind, z.B. Härtungskatalysatoren, organische Bindemittel, Pigmente, Farbstoffe, flammhemmende Zusätze, Verbindungen glasbildender Elemente, Korrosionsschutzmittel und/oder Beschichtungshilfsmittel.

5. Verbundwerkstoff nach einem der Ansprüche 1 bis 4, **dadurch gekennzeichnet, dass** 5 bis 60, vorzugsweise 10 bis 40 und besonders bevorzugt 10 bis 20 Masse-% der Komponente (a) zur Herstellung des Nanokomposits eingesetzt worden sind.

6. Verbundwerkstoff nach einem der Ansprüche 1 bis 5, **dadurch gekennzeichnet, dass** 20 bis 95, vorzugsweise 40 bis 90 und besonders bevorzugt 70 bis 90 Masse-% der Komponente (b), ausgedrückt als Polysiloxan der Formel:
RₓSiO_{(2-0,5x)}, zur Herstellung des Nanokomposits eingesetzt worden sind.

7. Verbundwerkstoff nach einem der Ansprüche 4 bis 6, **dadurch gekennzeichnet, dass** nicht mehr als 20, vorzugsweise nicht mehr als 10 und besonders bevorzugt nicht mehr als 5 Masse-% der anderen Zusatzstoffe (c) zur Herstellung des Nanokomposits eingesetzt worden sind.

8. Verbundwerkstoff nach einem der Ansprüche 1 bis 7, **dadurch gekennzeichnet, dass** die Oberflächenmodifizierung mit 0,25 bis 0,45 Mol Wasser pro Mol der vorhandenen hydrolysierbaren Gruppen durchgeführt worden ist.

9. Verbundwerkstoff nach einem der Ansprüche 1 bis 8, **dadurch gekennzeichnet, dass** der Masseanteil des Nanokomposits 0,1 bis 80, vorzugsweise 1 bis 40 und besonders bevorzugt 1 bis 20 Masse-%, beträgt.

10. Verbundwerkstoff nach einem der Ansprüche 1 bis 9, **dadurch gekennzeichnet, dass** das Substratmaterial ausgewählt ist aus Metallen, Nichtmetallen, Glas, Keramik, Kohlenstoff, Oxiden, Nitriden, Carbiden, Boriden, Kunststoffen und Mineralien.

11. Verbundwerkstoff nach einem der Ansprüche 1 bis 10, **dadurch gekennzeichnet, dass** die Härtung thermisch, vorzugsweise bei Temperaturen zwischen 50°C und 300°C, erfolgt.

12. Verbundwerkstoff nach einem der Ansprüche 1 bis 11 in Form eines mit dem Nanokomposit beschichteten Substrats, eines mit dem Nanokomposit imprägnierten Gewebes oder eines ein mit dem Nanokomposit konsolidiertes Substratmaterial umfassenden Formkörpers.

13. Verwendung eines wie in den Ansprüchen 1 bis 12 definierten Nanokomposits zur Beschichtung und/oder Konsolidierung von teilchen-, flocken-, faser-, band-, bahn-, blatt-, folien-, platten-, block- oder schichtförmigen Substraten, ausgenommen Glas- oder Mineralfasern und Pflanzenmaterialien.

## Claims

1. Composite material, **characterized by** a substrate, which is not a glass fibre or mineral fibre and is not a plant material, and by a nanocomposite which is in functional contact with the substrate, which composite material is obtainable by a process comprising
(1) provision of a nanocomposite sol by surface modification of
a) colloidal inorganic particles with
b) one or more silanes of the general formula
RₓSiA₄₋ₓ (I)
where the radicals A are identical or different and are hydroxyl groups or groups which can be removed hydrolytically, except methoxy, the radicals R are identical or different and are groups which cannot be removed hydrolytically and x is 0, 1, 2 or 3, where x ≥ 1 in at least 50 mol% of the silanes;
under the conditions of the sol-gel process with a below-stoichiometric amount of water of from 0.1 to 0.45 mol of water per mole of the hydrolysable groups which are present,
(2) bringing the nanocomposite sol into contact with the substrate, the nanocomposite sol being activated by feeding in a further amount of water before the contacting,
(3) followed by curing.

2. Composite material according to Claim 1, **characterized in that** the surface modification has been carried out in the presence of an acid condensation catalyst at a pH of from 1 to 2.

3. Composite material according to Claim 1 or 2, **characterized in that** the colloidal inorganic particles (a) are selected from the group consisting of sols and of powders dispersible at the nano level of SiO₂, TiO₂, ZrO₂, Al₂O₃, Y₂O₃, CeO₂, SnO₂, ZnO, iron oxides or carbon.

4. Composite material according to one of Claims 1 to 3, **characterized in that**, for preparing the nanocomposite sol, other additives (c) have been used, for example curing catalysts, organic binders, pigments, dyes, flame retardants, compounds of glass-forming elements, anticorrosion agents and/or coating aids.

5. Composite material according to one of Claims 1 to 4, **characterized in that** from 5 to 60% by weight, preferably from 10 to 40% by weight, and particularly preferably from 10 to 20% by weight, of component (a) have been employed for preparing the nanocomposite.

6. Composite material according to one of Claims 1 to 5, **characterized in that** from 20 to 95% by weight, preferably from 40 to 90% by weight, and particularly preferably from 70 to 90% by weight, of component (b), expressed as polysiloxane of the formula: RₓSiO_{(2-0.5x)}, have been employed for preparing the nanocomposite.

7. Composite material according to one of Claims 4 to 6, **characterized in that** not more than 20% by weight, preferably not more than 10% by weight, and particularly preferably not more than 5% by weight, of the other additives (c) have been employed for preparing the nanocomposite.

8. Composite material according to one of Claims 1 to 7, **characterized in that** the surface modification has been carried out using from 0.25 to 0.45 mol of water per mole of the hydrolysable groups which are present.

9. Composite material according to one of Claims 1 to 8, **characterized in that** the proportion by weight of the nanocomposite is from 0.1 to 80%, preferably from 1 to 40%, and particularly preferably from 1 to 20%.

10. Composite material according to one of Claims 1 to 9, **characterized in that** the substrate material is selected from the group consisting of metals, non-metals, glass, ceramic, carbon, oxides, nitrides, carbides, borides, plastics and minerals.

11. Composite material according to one of Claims 1 to 10, **characterized in that** the curing is carried out thermally, preferably at temperatures from 50°C to 300°C.

12. Composite material according to one of Claims 1 to 11 in the form of a substrate coated with the nanocomposite, a fabric impregnated with the nanocomposite or a shaped article comprising a substrate material consolidated with the nanocomposite.

13. Use of a nanocomposite as defined in Claims 1 to 12 for coating and/or consolidation of particulate, flocculent, fibrous, strip-shaped, web-shaped, plate-shaped, foil-shaped, sheet-shaped, block-shaped or layered substrates, except glass fibres or mineral fibres and plant materials.

## Revendications

1. Matériau composite, **caractérisé par** un substrat, qui n'est pas une fibre de verre ou minérale et qui n'est pas un matériau végétal, et un nanocomposite en contact fonctionnel avec celui-ci, qui peut être obtenu par un procédé comprenant :
(1) la préparation d'un sol nanocomposite par modification de surface de
a) particules inorganiques colloïdales avec
b) un ou plusieurs silanes de formule générale
RₓSiA₄₋ₓ (I)
dans laquelle les radicaux A sont identiques ou différents et représentent des groupes hydroxyle ou des groupes clivables par hydrolyse, à l'exception de méthoxy, les radicaux R sont identiques ou différents et représentent des groupes non clivables par hydrolyse, et x a la valeur 0, 1, 2 ou 3, avec x ≥ 1 pour au moins 50 % en moles des silanes ;
dans les conditions du procédé sol-gel avec une quantité d'eau sous-stoechiométrique de 0,1 à 0,45 mole d'eau par mole des groupes hydrolysables présents,
(2) la mise en contact du sol nanocomposite avec le substrat, le sol nanocomposite étant activé avant la mise en contact par introduction d'une quantité d'eau supplémentaire,
(3) et enfin le durcissement.

2. Matériau composite selon la revendication 1, **caractérisé en ce que** la modification de surface est réalisée en présence d'un catalyseur de condensation acide à un pH de 1 à 2.

3. Matériau composite selon la revendication 1 ou 2, **caractérisé en ce que** les particules inorganiques colloïdales (a) sont choisies parmi les sols et les poudres nanométriques dispersibles de SiO₂, TiO₂, ZrO₂, Al₂O₃, Y₂O₃, CeO₂ , SnO₂, ZnO, d'oxydes de fer ou de carbone.

4. Matériau composite selon l'une quelconque des revendications 1 à 3, **caractérisé en ce que** d'autres additifs (c) sont utilisés pour la fabrication du sol nanocomposite, p. ex. des catalyseurs de durcissement, des liants organiques, des pigments, des colorants, des additifs ignifuges, des composés d'éléments formant du verre, des agents anticorrosion et/ou des adjuvants de revêtement.

5. Matériau composite selon l'une quelconque des revendications 1 à 4, **caractérisé en ce que** 5 à 60, de préférence 10 à 40 et de manière particulièrement préférée 10 à 20 % en masse du composant (a) sont utilisés pour la fabrication du nanocomposite.

6. Matériau composite selon l'une quelconque des revendications 1 à 5, **caractérisé en ce que** 20 à 95, de préférence 40 à 90 et de manière particulièrement préférée 70 à 90 % en masse du composant (b), exprimé en tant que polysiloxane de formule : RₓSiO_{(2-0,5x)}, sont utilisés pour la fabrication du nanocomposite.

7. Matériau composite selon l'une quelconque des revendications 4 à 6, **caractérisé en ce que** pas plus de 20, de préférence pas plus de 10 et de manière particulièrement préférée pas plus de 5 % en masse des autres additifs (c) sont utilisés pour la fabrication du nanocomposite.

8. Matériau composite selon l'une quelconque des revendications 1 à 7, **caractérisé en ce que** la modification de surface est réalisée avec 0,25 à 0,45 mole d'eau par mole des groupes hydrolysables présents.

9. Matériau composite selon l'une quelconque des revendications 1 à 8, **caractérisé en ce que** la proportion massique du nanocomposite est de 0,1 à 80, de préférence 1 à 40 et de manière particulièrement préférée 1 à 20 % en masse.

10. Matériau composite selon l'une quelconque des revendications 1 à 9, **caractérisé en ce que** le matériau substrat est choisi parmi les métaux, les non-métaux, le verre, la céramique, le carbone, les oxydes, les nitrures, les carbures, les borures, les plastiques et les minéraux.

11. Matériau composite selon l'une quelconque des revendications 1 à 10, **caractérisé en ce que** le durcissement a lieu thermiquement, de préférence à des températures comprises entre 50 °C et 300 °C.

12. Matériau composite selon l'une quelconque des revendications 1 à 11, sous la forme d'un substrat revêtu du nanocomposite, d'un tissu imprégné avec le nanocomposite ou d'un corps moulé comprenant un matériau substrat consolidé avec le nanocomposite.

13. Utilisation d'un nanocomposite tel que défini dans les revendications 1 à 12 pour le revêtement et/ou la consolidation de substrats en forme de particules, de floculats, de fibres, de rubans, de bandes, de feuilles, de films, de plaques, de blocs ou de couches, à l'exception des fibres de verre ou minérales et des matériaux végétaux.
